(19) Europäisches Patentamt
European Patent Office
Office européen des brevets

(11) Publication number: **0 122 649**
**B1**

(12) **EUROPEAN PATENT SPECIFICATION**

(45) Date of publication of patent specification: **06.05.87**

(51) Int. Cl.⁴: **C 08 G 18/18**, C 08 G 18/79, C 08 G 18/42

(21) Application number: **84200369.1**

(22) Date of filing: **14.03.84**

(54) **Method for the manufacture of polyisocyanurate foams.**

(30) Priority: **17.03.83 US 476183**
**02.08.83 US 519575**

(43) Date of publication of application:
**24.10.84 Bulletin 84/43**

(45) Publication of the grant of the patent:
**06.05.87 Bulletin 87/19**

(84) Designated Contracting States:
**BE DE FR GB IT NL SE**

(56) References cited:
**WO-A-83/03415**
**DE-A-2 527 242**
**DE-A-2 826 229**
**DE-A-2 942 330**
**US-A-3 853 818**
**US-A-3 980 594**
**US-A-3 988 267**

(73) Proprietor: **AKZO N.V.**
**Velperweg 76**
**NL-6824 BM Arnhem (NL)**

(72) Inventor: **White, Kenneth B.**
**1212, W. Lunt**
**Chicago Illinois 60626 (US)**
Inventor: **Largent, William Jay**
**7413, Brookdale Drive Apt. 211**
**Darien Illinois 60559 (US)**

(74) Representative: **Sieders, René et al**
**P.O. Box 314**
**NL-6800 AH Arnhem (NL)**

**EP 0 122 649 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to the manufacture of polyisocyanurate foams, and is more particularly concerned with a method for the manufacture of foams that utilizes a very small amount of a metal catalyst and also uses an amine/quaternary ammonium borate ester blend as a polyol. Methods of manufacturing polyisocyanurate foams are well known in the art, and include the method described in United States Patent No. 4 256 802, issued to Koehler et al on March 17, 1981 (hereinafter referred to as "Koehler"). Koehler discloses polyol blends comprising from about 20% to about 85% by weight of the blend of an amine diol or mixture of amine diols selected from the formula:

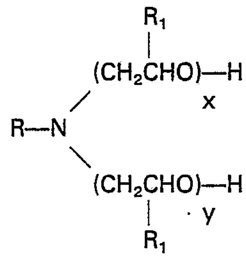

wherein R is an aliphatic radical having from 8 to 18 carbon atoms, inclusive, each $R_1$ is independently selected from the group consisting of hydrogen or methyl, x and y each independently have an average value from about 4 to about 15 inclusive; and from about 15 percent to about 80 percent by weight of a primary hydroxyl polyol (II) characterized by a molecular weight of from about 60 to about 1000. Koehler asserts that the polyol blends described therein are miscible with fluorocarbon blowing agents and water and other adjuvants including trimerization catalysts, and that its blends are particularly useful in a process for the preparation of polyisocyanurate foams. Those foams are said to be characterized by high reaction exotherms, making them particularly suited to the preparation of polyisocyanurate foam laminates.

It is noted that the Koehler process for foam manufacture, in which the "B" side utilizes a fluorocarbon blowing agent and a polyol, and also requires a trimerization catalyst in an amount of from 2 to 20 percent by combined weight of the catalyst, fluorocarbon blowing agent, and polyol. Trimerization catalysts disclosed in Koehler include (1) a catalyst combination of alkali metal salts of an N-substituted amide, an alkali metal salt of an N(2-hydroxyphenyl)methyl glycine and optionally a tertiary amine trimerization catalyst, and (2) the same catalyst as described hereinabove except the optional component is a hydroxyalkyltrialkylammonium carboxylate salt.

Certain quarternary ammonium carboxylate salts and even quaternary borate salts have been disclosed as trimerization catalysts, but not as polyols, in several prior art references (see U.S. Patent Nos. 4,040,992, 4,186,255 and 4,151,334). The aforementioned quaternary borate salts are compounds such as, for example, sodium phenyl triethanolamineborates, which all have sodium as the cationic portion of the molecule. Thus, all of these quarternary borate salts are alkali metal salts (see U.S. Patent No. 4,151,334, column 2, lines 6—7), compounds that were previously known as trimerization catalysts.

The present invention is a method for the manufacture of polyisocyanurate foams, comprising blending a "B" side with an "A" side, the "A" side comprising an isocyanate. The "B" side comprises a diol or a polyester polyol, an amine/quaternary ammonium borate ester blend, a surfactant, a blowing agent, and a metal catalyst, the weight of the metal catalyst not to exceed 1.5% of the total weight of the "B" side. The "B" side remains a homogeneous liquid without the need for agitation for at least seven days, when use is made of a diol, and for at least one day, when use is made of a polyester polyol, and the foams manufactured in the method of the invention have a friability not exceeding 30%.

In another embodiment of the invention the diol may be selected from the group consisting of diethylene glycol, dipropylene glycol, and a polyethylene glycol ether whereby the weight ratio of amine to quarternary ammonium borate ester in the amine/quarternary ammonium borate ester blend is from 1:0.15 to 1:0.90.

In yet another embodiment of the invention the polyester polyol may be selected from the group consisting of Foamol 250 resin polyol, a product of Jim Walter Research Corporation, 10301 9th Street North, St Petersburg, Florida; D-400 resin polyol available from Dixie Chemical Company, 10701 Bay Area Boulevard, Pasadena, Texas; and Terate® 203 resin polyol, available from Hercules, Incorporated, Wilmington, Delaware, the weight ratio of amine to quaternary ammonium borate ester in the amine/quaternary ammonium borate esther blend being from 1:0.15 to 1:0.23. Foamol 250 is of the general formula:

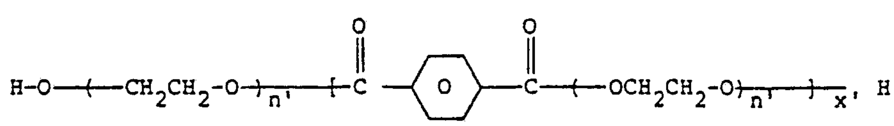

wherein n′ is either 1 or 2 and x′ is an integer equal to 1 or more. Polyol D-400 is of the general formula:

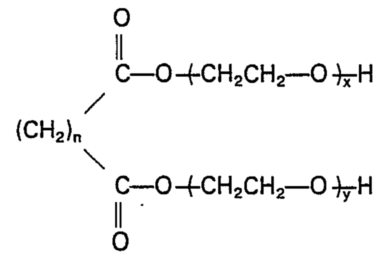

wherein n is either 1, 2, 3, or 4, and x and y are integers having a value of 2 or more. Terate® 203 is of the general formula:

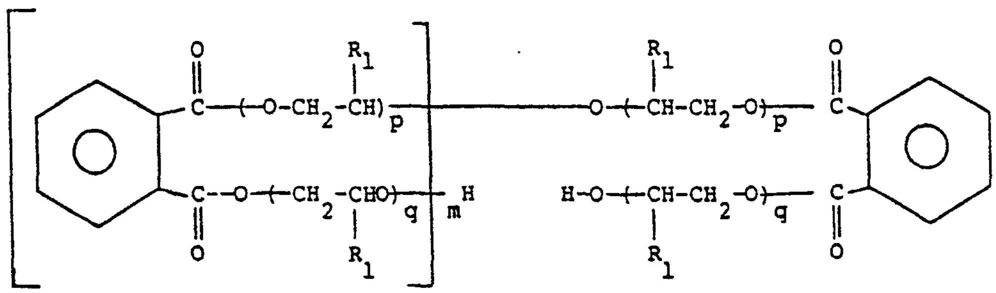

where m is from 0 to 50, $R_1$ is either H— or $CH_3$—, and p and q are each integers from 1 to 10;

In still another embodiment of the invention, the isocyanate is a polymeric methylene diphenyldiisocyanate.

An object of the present invention is thus a method of manufacturing polyisocyanurate foams with a diol or a polyol that permits the amount of trimerization catalyst used to be significantly less than the amount of trimerization catalyst used in previous methods for the manufacture of such foams.

The isocyanates used in the "A" side herein may be selected from the groups including the organic polyisocyanates which are disclosed and known in the art as useful in the production of conventionally manufactured polyisocyanurate foams. The preferred polyisocyanate is Mondur® MR, a polycyclic aromatic polyisocyanate available from the Mobay Chemical Corporation, Pittsburgh, Pennsylvania.

The present polyisocyanurate foams may be manufactured according to methods known in the art. These methods comprise blending two components, stirring, and allowing the component mix to rise in an open container so as to form the desired foam. The two components are known as the "A" and "B" components, with the "A" component comprising the polyisocyanate and the "B" component comprising a blend of polyol, catalyst, surfactant and blowing agent.

Catalysts may be selected from those conventionally used in the art, including metal salts, alkali metal salts, and tertiary amine trimerization catalysts. The preferred catalyst is potassium octanoate or potassium 2-ethylhexanoate. The present preferred catalyst is M & T — T45 catalyst, which is 45% active potassium 2-ethylhexanoate and 55% polyethylene glycol having a molecular weight of 200, and which is available from M & T Chemicals Inc., Rahway, New Jersey, 07065. The weight of the catalyst to be used will be less than 1.5% of the total "B" side weight, and most preferably less than 1.0% of the total "B" side weight.

The blowing agent may be selected from the group including water, methylene chloride, or any of the fluorocarbons known to those skilled in the art which can be used for blowing polymer mixtures into cellular polymers. Generally speaking, such fluorocarbon blowing agents are fluorinated aliphatic hydrocarbons which may also be substituted by chlorine and/or bromine. A most preferred blowing agent is Freon® 11A, a trifluorochloromethane produced by E. I. DuPont de Nemours & Company, Wilmington, Delaware.

Surfactants may likewise be chosen from among those known to the skilled in the art; a preferred surfactant is DC-193, a surfactant having silicon glycol copolymers with a direct silicon-carbon bond, and sold by Dow Corning Corporation, Midland, Michigan.

Preferred diols will be selected from the group including diethylene glycol, dipropylene glycol, and polyester and polyethylene glycols, such as PEG 200. Polyethylene glycol ethers include those compounds of the general formula:

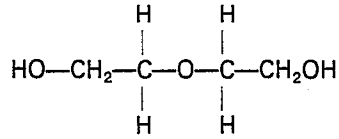

Polyethylene glycols will include those compounds having longer carbon chains on either side of the oxygen atom. The general formula for the polyethylene glycols is:

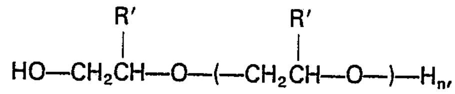

wherein R′ is either a hydrogen or methyl ($CH_3$—) radical and wherein n may be from 1 to 10. When use is made of these diols the amine/quaternary ammonium borate ester ratio in the amine/quaternary ammonium borate ester blend is from 1:0.15 to 1:0.90. This range of ratios is the range of ratios of amine to quaternary ammonium borate ester in the Armol® 200 series, that is Armol® 201B—125, 135, 145, 155 and 175. These compounds are available from the Armak Company, 300 S. Wacker Drive, Chicago, Illinois 60606, or can be manufactured in accordance with the procedures set forth in Examples 1 and 2 hereinbelow.

Preferred polyester polyols include the D-400 polyol, the Foamol 250, and the Terate 203 polyester polyols referred to hereinabove. When use is made of these polyester polyols the amine/quaternary ammonium borate ester ratio in the amine/quaternary ammonium borate ester blend is from 1:0.15 to 1:0.23. This range of ratios is the range of ratios of amine to quaternary ammonium borate ester in the first two members of the Armol® 200 series, that is, Armol® 201B—125 and 135 (see above).

The isocyanates may be selected from the groups including the organic polyisocyanates which are disclosed herein as useful in the production fo conventionally manufactured polyisocyanurate foams. A preferred polyisocyanate is Mondur® MR, a polycyclic aromatic polyisocyanate available from the Mobay Chemical Corporation, Pittsburgh, Pennsylvania.

The molar ratio of isocyanate to polyol, that is, the ratio of NCO functional groups to OH functional groups, is known as the "index" or "NCO/OH ratio". Foams are manufactured with both isocyanates and polyols, and when the molar ratio of isocyanate to polyol is between 1.05 to 1.15, a urethane foam is formed according to the reaction:

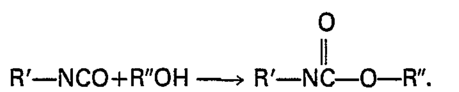

The urethane product shown above is the monomeric structural unit that combines to form the polyurethane foam. At an index between 1.5 and 3.5, a urethane-modified isocyanurate foam is formed. At indices above 4.1, a isocyanurate foam is formed, having as its monomeric unit the product of the reaction:

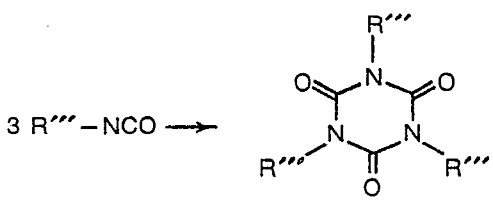

which may have a minority of urethane linkages. Herein, the terms isocyanurate and polyisocyanurate and the terms urethane and polyurethane in reference to foams will be used interchangably.

The present claims are directed to polyisocyanurate foams, and the NCO/OH index of the blends used to make these foams will always exceed 4.0. Typical polyisocyanurate foams manufactured in accordance with the process herein have an NCO/OH ratio of 4.4. A good foam will have as a "B" side a blend that remains homogeneous when left in a closed container for seven days, when use is made of a diol, and for one day, when use is made of a polyester polyol, and such a foam will further have a friability less than 30%. Friability will be determined in accordance with the American Society for Testing Materials (ASTM) Test C421.

The amines used in the present amine/quaternary ammonium borate ester blend may include polyethoxylated or polypropoxylated amines, wherein the amines are tertiary amines having one fatty alkyl derived from various fatty sources and two or more polyoxyethylene or polyoxypropylene groups attached to the nitrogen. Typical of these polyethoxylated or polypropoxylated amines are the Ethomeen® polyethoxylated amines available from the Armak Company, 300 S. Wacker Drive, Chicago, Illinois, 60606, preferably being of the general formula:

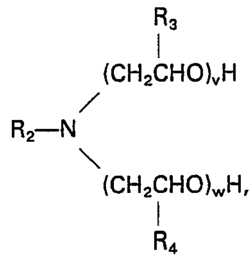

wherein $R_2$ is selected from the group of alkyl radicals having from 1 to 18 carbon atoms, v and w are integers each having a value of one or more, the sum of v and w are not exceeding 50; and wherein $R_3$ and $R_4$ may be the same or different, and may be selected from th groups consisting of H—, $CH_3$—, $C_1$—$C_{10}$ straight- or branched-chain alkyl or alkenyl radicals, a phenyl group, a benzyl group or halogenated alkyl group. Another preferred polyalkoxylated amine includes the compound Ethomeen® EA—80 polyethoxylated ether amine, which is manufactured by the combination of a $C_8$ and $C_{10}$ branched-chain alcohol and which is also available from the Armak Company, Chicago, Illinois. These preferred ether amines are selected from the group consisting of:

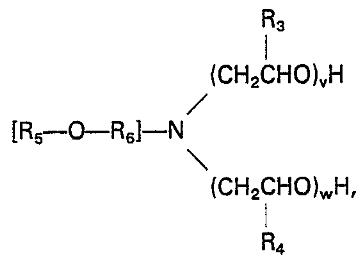

wherein $R_5$ is selected from the group of $C_1$—$C_{20}$ alkyl groups, and $R_6$ is a $C_2$ to $C_5$ alkylene group; $R_3$ and $R_4$ are the same or different and may be selected from the groups consisting of H—, $CH_3$—, $C_1$ to $C_{10}$ straight- or branched-chain alkyl or alkenyl radicals, a phenyl group, a benzyl group, or a halogenated alkyl group; and v and w are integers each having a value of at least 1 and having a sum not exceeding 50.

The quarternary ammonium borate esters are of the general formula:

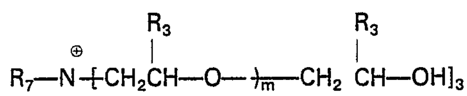

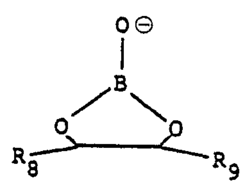

wherein $R_7$ is a straight- or branched-chain alkyl or alkenyl radical having from 1 to 30 carbon atoms, inclusive, or phenyl or benzyl radical; $R_3$ is H—, a $C_1$ to $C_{10}$ straight- or branched-chain alkyl or alkenyl radical, a phenyl group, a benzyl group, or a halogenated alkyl group; $R_8$ and $R_9$ are different or the same and are selected from the group including H—, or a $C_1$ to $C_{10}$ straight- or branched-chain alkyl or alkenyl radical, a phenyl group, or a benzyl group, and wherein m is an integer from 0 to 30, inclusive. The cationic portion or the polyalkoxylated quaternary ammonium borate ester may also be selected from the group described by the general formula:

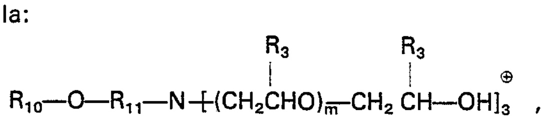

wherein m and $R_3$ are as defined hereinabove, $R_{10}$ is a $C_1$—$C_{20}$ alkyl or alkoxy group, and $R_{11}$ is a $C_2$ to $C_5$ alkylene group. Preferably, $R_{11}$ is —$C_3H_6$— and $R_{10}$ is a combination of approximately equal amounts of $C_{12}$—$C_{15}$ alkyl groups. In this specification, the cationic portion of the polyalkoxylated quaternary ammonium borate esters may be selected from either of the above two general formulae.

The following Examples 1 and 2 will demonstrate the manufacture of the amine/quaternary ammonium borate ester blend used in the present invention. Examples 3—8 will demonstrate the manufacture of foams in accordance with the present process.

Example 1

304 grams of 1,2-propanediol (4.0 gram moles) are added to 124 grams of boric acid (2.0 gram moles) in a one-liter, three neck flask equipped with a heating mantle, a Dean-Stark trap, and a condenser. The mixture is heated to 128°C at atmospheric pressure, and retained at that temperature and pressure for about 3½ hours, during which time about 44.5 grams of water was stripped from the mixture. A water aspirator is then started to create a slight vacuum at the condenser, and another 65.0 grams of water is stripped from the mixture during the next 5¾ huors. The total water removed (109.5 grams) corresponds to the stoichiometric amount, but analysis of the borate ester adduct remaining in the flask showed that it contained 3.4% water.

A 100 gallon Monel reactor was charged with 84 kg. (0.71 mole) of Armeen® TM 97 aliphatic amine and 13.6 kg of diethylene glycol, and the mixture was heated to 65°C. Over a two hour period, 38.5 kg (0.53 mole) of the bis propylene glycol ester described in the first paragraph of this Example was pumped into the reactor, causing the temperature to rise to 80°C. After cooling to 75°C, 60 kg (3.02 mole) of ethylene oxide was added over a period of two hours and 42 minutes. During this time the total reactor pressure was not allowed to exceed 3.6 bar and the temperature was maintained at 95°C. The mixture was allowed to digest for another 2 hours and 40 minutes, whereupon analysis showed 1.317 meq/g of quat and 0.307 meq/g of free amine and 0.3% $H_2O$. The reactor was purged with a stream of nitrogen at 75—85°C for 4 hours and an additional 6 hours at 100°C. Analysis of this adduct showed 0.11% $H_2O$.

12.6 kg of the adduct and 48.6 kg Ethomeen® T/15, also available from the Armak Company, were mixed in a 30 gallon Pfaudler reactor at 70°C. Water was removed from the blend by sparging with a stream of nitrogen at 70°C and 27" Hg vacuum over a 5½ hour period. Analysis after this time showed; guat 0.238 meq/g, free amines 1.779 meq/g, pH (10% in $H_2O$) 10.9, $H_2O$<0.1% and OH value 318. This product corresponds to Armol® 201B—125 amine/ammonium borate ester blend.

Example 2

17.7 kg of the adduct whose manufacture is described in the first two paragraphs of Example 1 hereinabove and 43.5 kg of Ethomeen® T/15 ethoxylated amine were blended at 70°C in a 30 gallon Pfaudler reactor. Water was removed by sparging with a stream of nitrogen at 70°C and 27" Hg vacuum over 5 hours.

Analysis showed; quat 0.331 meq/g, free amine 1.650 meq/g, pH (10% in water) 10.9, $H_2O$<0.1%, OH value 332. This product corresponds to Armol® 201B—135 amine/ammonium borate ester blend.

Armol® 201B—145, Armol® 201B—155 and Armol® 201B—175 amine/ammonium borate ester blends are manufactured in the manner described above using a ratio of the aforesaid adduct to Ethomeen® T/15 of 4.8:8.2, 5.9:7.1 and 9.3:5.7, respectively.

Example 3

A polyisocyanurate foam was manufactured by blending 90.4 grams of Mondur® MR with a "B" side comprising 13.4 grams of Terate 203 resin polyol, 13 grams of Armol® 201B—135, 2.5 grams of DC—193, 0.2 grams of T-45 catalyst, and 18 grams of Freon® 11A to give a blend having an NCO/OH ratio of 4.4. The resulting foam had a cream time of 6 seconds, a gel time of 8 seconds, a tack free time of 19 seconds, a density of 0.030 gram per cc., 92.21% closed cells, and a friability of 6.1%. The resulting foam was at 107.2% of its original dimensions after seven days at 70°C and 100% relative humidity, and was at 102.6% of its original dimensions after seven days at 93°C and the ambient relative humidity. The "B" side, when placed in a closed container, remained a homogeneous liquid when left to stand without agitation for one day.

Example 4

A polyisocyanurate foam was manufactured by blending 78.2 grams of Mondur® MR with a "B" side comprising 10 grams of Armol® 201B—125, 13.4 grams of Terate 203 resin polyol, 2.5 grams of DC-193, 0.2 grams of T-45 catalyst, and 16 grams of Freon® 11A to give a blend having an NCO/OH ratio of 4.4. The resulting foam had a cream time of 23 seconds, a gel time of 43 seconds, a tack free time of 100 seconds, a density of 0.030 gram per cc., 92.70% closed cells, and a 5.2% friability. The resulting foam also was at 109.4% of its original dimensions after seven days at 70°C and 100% relative humidity, and was at 104.9% of its original dimensions after seven days at 93°C and the ambient relative humidity. The "B" side, when placed in a closed container, remained a homogeneous liquid when left to stand without agitation for one day.

Example 5

A polyisocyanurate foam was manufactured by blending 89.6 grams of Mondur® MR with a "B" side comprising 13.4 grams of Foamol 250, 10 grams of Armol® 201B—125, 2.5 grams of DC-193, 0.2 grams of T-45 catalyst, and 17.5 grams of Freon® 11A to give a blend having an NCO/OH ratio of 4.4. The resulting foam had a cream time of 11 seconds, a gel time of 21 seconds, a tack free time of 100 seconds, a density of 0.027 gram per cc, 87.71% closed cells, and a friability of 21.3%. The resulting foam was at 106.3% of its original dimensions after seven days at 70°C and 100% relative humidity, and was at 103.4% of its original dimensions after seven days at 93°C and the ambient relative humidity. The "B" side, when placed in a closed container, remained a homogeneous liquid when left to stand without agitation for one day.

Example 6

A polyisocyanurate foam was manufactured by blending 71.6 grams of Mondur® MR with a "B" side comprising 10 grams of Armol® 201B—125, 13.4 grams of D-400 polyol, 2,5 grams of DC-193, 0.2 grams of T-45 catalyst, and 15 grams of Freon® 11A to give a blend having an NCO/OH ratio of 4.4. The resulting foam had a cream time of 12 seconds, a gel time of 18 seconds, a rise time of 65 seconds, a density of 0.027 gram per cc, 89.2% closed cells, and 8.5% friability. The resulting foam also was at 104.1% of its original dimensions after seven days at 70°C and 100% relative humidity, and was at 105.4% of its original dimensions after seven days at 93°C and the ambient relative humidity. The "B" side, when placed in a closed container, remained a homogeneous liquid when left to stand without agitation for one day.

Example 7

A polyisocyanurate foam was manufactured by blending 194.7 grams of Mondur® MR with a "B" side comprising 13.4 grams of diethylene glycol, 13 grams of Armol® 201B—125, 2.5 grams of DC-193, 0.2 grams of T-45 catalyst, and 34 grams of Freon® 11A to give a blend having an NCO/OH ratio of 4.4. The resulting foam had a cream time of 23 seconds, a gel time of 34 seconds, a tack free time of 48 seconds, a density of 0.030 gram per cc, 97.25% closed cells, and a friability of 5.9%. The resulting foam was at 104.2% of its original dimensions after seven days at 70°C and 100% relative humidity, and was at 102.4% of its original dimensions after seven days at 93°C and the ambient relative humidity. The "B" side, when placed in a closed container, remained a homogeneous liquid when left to stand without agitation for seven days.

Example 8

A polyisocyanurate foam was manufactured by blending 196.6 grams of Mondur® MR with a "B" side comprising 13 grams of Armol® 201B—135, 13.4 grams of diethylene glycol, 2.5 grams of DC-193, 0.2 grams of T-45 catalyst, and 34 grams of Freon® 11A to give a blend having an NCO/OH ratio of 4.4. The resulting foam had a cream time of 23 secconds, a gel time of 34 seconds, a rise time of 46 seconds, a density of 0.032 gram per cc, 98.62% closed cells, and a 10.28% friability. The resulting foam also was at 104.0% of its original dimensions after seven days at 70°C and 100% relative humidity, and was at 101.6% of its original dimensions after seven days at 93°C and the ambient relative humidity. The "B" side, when placed in a closed container, remained a homogeneous liquid when left to stand without agitation for seven days.

**Claims**

1. A method for the manufacture of polyisocyanurate foams, comprising blending a "B" with an "A" side, said "A" side comprising an isocyanate and said "B" side comprising a diol or a polyester polyol, an amine/quaternary ammonium borate ester blend, a surfactant, a blowing agent, and a metal compound catalyst, the weight of said catalyst not to exceed 1.5% of the total weight of said "B". side, and the said quaternary ammonium borate ester is of the general formula:

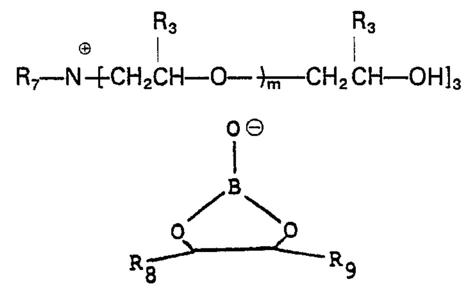

wherein $R_7$ is a straight- or branched-chain alkyl or alkenyl radical having from 1 to 30 carbon atoms, inclusive, or a phenyl or benzyl radical, or a $R_{10}$—O—$R_{11}$— group wherein $R_{10}$ is a $C_1$—$C_{20}$ alkyl or alkoxy group, and $R_{11}$ is a $C_2$ to $C_5$ alkylene group; $R_3$ is H—, a $C_1$ to $C_{10}$ straight- or branched-chain alkyl or alkenyl radical, a phenyl group, a benzyl group, or a halogenated alkyl group; $R_8$ and $R_9$ are different or the same and are selected from the group including H—, or a $C_1$ to $C_{10}$ straight- or branched-chain alkyl or alkenyl radical, a phenyl group, or a benzyl group, and wherein m is an integer from 0 to 30, inclusive.

2. The method as set forth in Claim 1 wherein use is made of a diol and the weight ratio of amine to quaternary ammonium borate ester is from 1:0.15 to 1:0.90.

3. The method as set forth in claim 1 or 2, wherein said diol may be selected from the group consisting of diethylene glycol, dipropylene glycol, and a polyethylene glycol ether.

4. The method as set forth in claim 1 wherein use is made of a polyester polyol and the weight ratio of amine to quarternary ammonium borate ester is from 1:0.15 to 1:0.23.

5. The method as set forth in claim 1 or 4, wherein said polyester polyol is of the general formula:

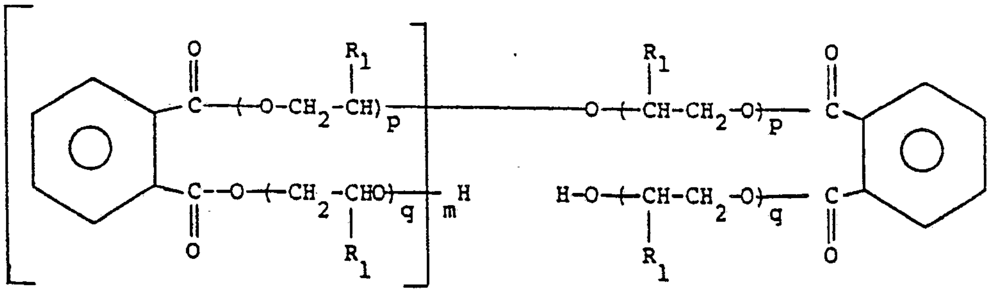

wherein m is from 0 to 50, $R_1$ is either H— or $CH_3$—, and p and q are integers each having a value of from 1 to 10.

6. The method as set forth in claim 1 or 4, wherein said polyester polyol is of the general formula:

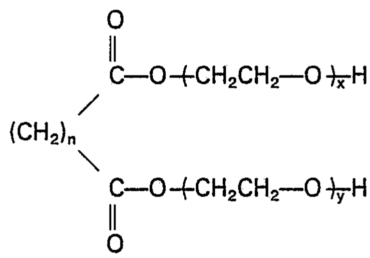

wherein n is either 1, 2, 3, or 4, and x and y are integers having a value of 2 or more.

7. The method as set forth in claim 1 or 4, wherein said polyester polyol is of the general formula

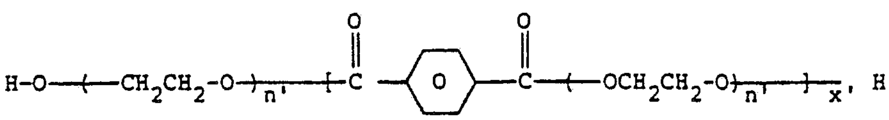

where n' is either 1 or 2 and x' is an integer equal to 1 or more.

8. The method as set forth in any of the foregoing claims, wherein the isocyanate is a polymeric methylene diphenyldiisocyanate.

**Patentansprüche**

1. Ein Verfahren zur Herstellung von Polyisocyanurat-Schaumen, umfassend das Vermischen einer "B"—Seite mit einer "A"—Seite, wobei die "A"—Seite ein Isocyanat und die "B"—Seite ein Diol oder Polyesterpolyol, eine Amin/quartärer Ammoniumboratester-Mischung, ein oberflächenaktives Mittel, ein Triebmittel, und einen Katalysator aus einer Metallverbindung, wobei das Gewicht dieses Katalysators nicht über 1,5% des Gesamtgewichts der genannten "B"—Seite beträgt, und der genannte quartäre Ammoniumboratester die allgemeine Formel

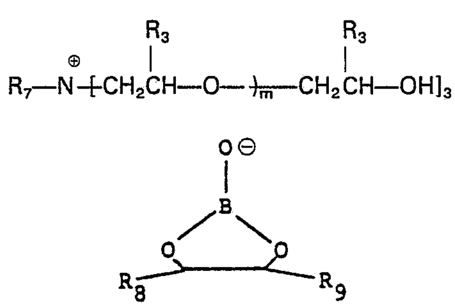

hat, in welcher $R_7$ eine gerad- oder verzweigtkettige Alkyl- oder Alkenylgruppe mit 1 bis einschließlich 30 Kohlenstoffatomen oder eine Phenyl-, oder Benzylgruppe, oder eine $R_{10}$—O—$R_{11}$ Gruppe, in welcher $R_{10}$ eine $C_1$—$C_{20}$—Alkyl- oder —Alkoxy- gruppe ist und $R_{11}$ eine $C_2$—$C_5$-Alkylengruppe ist, bedeutet; $R_3$ Wasserstoff, eine geradkettige oder verzweigtkettige $C_1$—$C_{10}$-Alkyl- oder -Alkenylgruppe, eine Phenyl-, Benzyl- oder halogenierte Alkylgruppe ist; $R_8$ und $R_9$ gleich oder verschieden sind und ausgewählt sind aus

der Gruppe bestehend aus Wasserstoff oder einer gerad kettigen oder verzweigtkettigen $C_1$—$C_{10}$-Alkyl-, oder Alkenylgruppe, einer Phenylgruppe, oder einer Benzylgruppe; und in welcher m eine ganze Zahl von 0 bis einschließlich 30 darstellt.

2. Das Verfahren wie in Anspruch 1 beansprucht, in welchem von einem Diol und einem Gewichtsverhältnis von Amin zu quartärem Ammonumboratester von 1:0,15 bis 1:0,90 Gebrauch gemacht wird.

3. Das Verfahren wie in Anspruch 1 oder 2 beatsprucht, in welchem das genannte Diol aus der Gruppe, bestehend aus Diäthylenglykol, Dipropylenglykol und einem Polyäthylenglykoläther ausgewählt sein kann.

4. Das Verfahren wie in Anspruch 1 beansprucht, in welchem ein Polyesterpolyol, und ein Gewichtsverhältnis von Amin zu quartärem Ammoniumboratester von 1:0,15 bis 1:0,23 angewendet wird.

5. Das Verfahren wie in Anspruch 1 oder 4 beansprucht, in welchem das gennannte Polyesterpolyol die allgemeine Formel

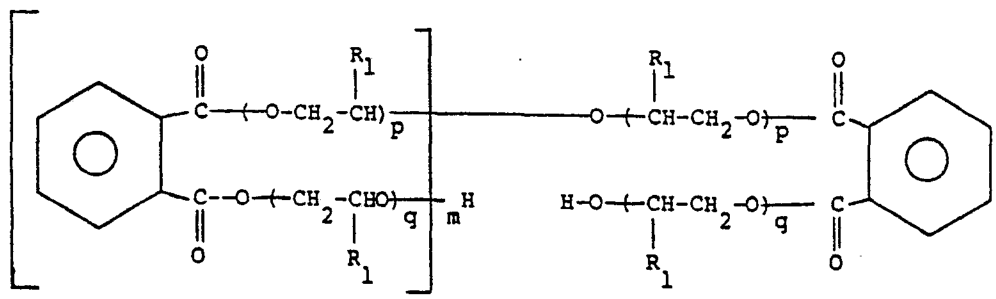

hat, in welcher m eine ganze Zahl von 0 bis 50 ist, $R_1$ entweder Wasserstoff oder eine $CH_3$-Gruppe ist, und p und q ganze Zahlen sind, deren jede einen Wert von 1 bis 10 hat.

6. Das Verfahren wie in Anspruch 1 oder 4 beansprucht, in welchem das genannte Polyesterpolyol die allgemeine Formel

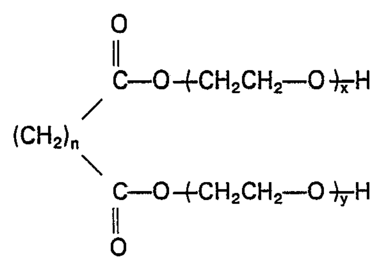

hat, in welcher n entweder den Wert 1, 2 3 oder 4 hat und x und y ganze Zahlen sind von einem Wert von 2 oder darüber.

7. Das Verfahren wie in Anspruch 1 oder 4 beansprucht, in welchem das genannte Polyesterpolyol die allgemeine Formel

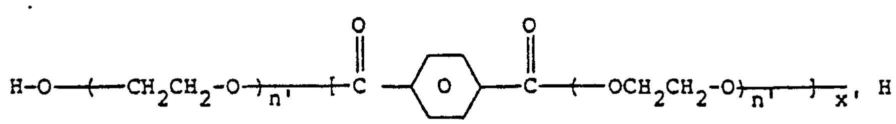

hat, in welcher n' entweder den Wert 1 oder 2 hat, und x' eine ganze Zahl mit einem Wert von 1 oder darüber bedeutet.

8. Das Verfahren wie in einem der vorstehenden Ansprüche beansprucht, in welchem das Isocyanat ein polymeres Methylendiphenyldiisocyanat ist.

**Revendications**

1. Un procédé pour la fabrication de mousses de polyisocyanurates consistant à mélanger un composant ou côté "B" avec un composant côté "A", ledit composant "A" comprenant un isocyanate et ledit composant "B" comprenant un diol ou un polyesterpolyol, un mélange amine/borate-ester d'ammonium quaternaire, un tensioactif, un agent porogène et un catalyseur du type composé métallique, le poids dudit catalyseur ne dépassant pas 1,5% du poids total dudit composant "B", et ledit borate-ester d'ammonium quaternaire répondant à la formule générale:

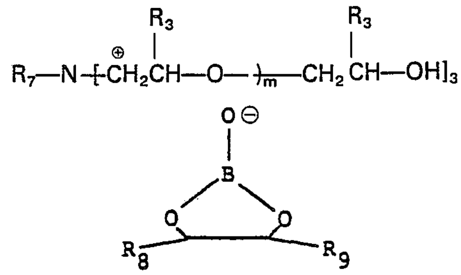

dans laquelle $R_7$ est un radical alkyle ou alcényle à chaîne droite ou ramifiée en $C_1$—$C_{30}$ inclus, un radical phényle ou benzyle ou un groupe $R_{10}$—O—$R_{11}$ dans lequel $R_{10}$ est un groupe alkyle ou alcoxy en $R_1$—$C_{20}$ et $R_{11}$ est un groupe alkylène en $C_2$—$C_5$; $R_3$ est H— ou un radical alkyle ou alcényle à chaîne droite ou ramifiée en $C_1$—$C_{10}$, un groupe phényle, un groupe benzyle ou un groupe alkyle halogéné; $R_8$ et $R_9$ sont identiques ou différents et sont choisis parmi H—, un radical alkyle ou alcényle à chaîne droite ou ramifiée en $C_1$—$C_{10}$, un groupe phényle, un groupe benzyle et m est un entier de 0 à 30 inclus.

2. Le procédé selon la revendication 1, dans lequel on utilise un diol et le rapport pondéral de l'amine au borate-ester d'ammonium quaternaire est de 1:0,15 à 1:0,90.

3. Le procédé selon la revendication 1 ou 2, dans lequel ledit diol peut être choisi parmi le diéthylèneglycol, le dipropylèneglycol et un polyéthylèneglycoléther.

4. Le procédé selon la revendication 1, dans lequel on utilise un polyesterpolyol et le rapport pondéral de l'amine au boratester d'ammonium quaternaire est de 1:0,15 à 1:0,23.

5. Le procédé selon la revendication 1 ou 4, dans lequel ledit polyesterpolyol répond à la formule générale:

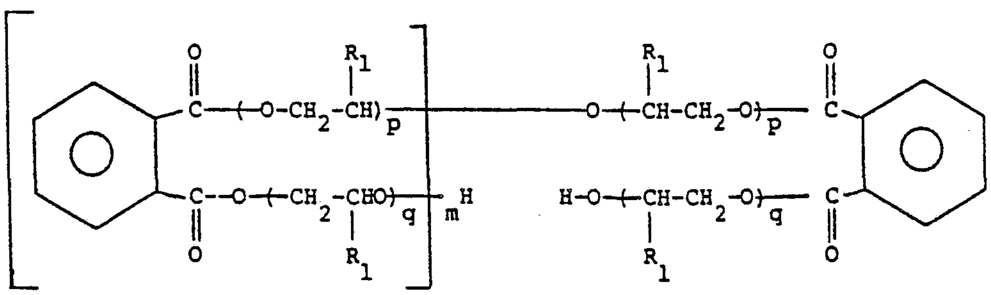

dans laquelle m est de 0 à 50, $R_1$ est soit H—, soit $CH_3$ et p et q sont des entiers ayant chacun une valeur de 1 à 10.

6. Le procédé selon la revendication 1 ou 4, dans lequel ledit polyesterpolyol répond à la formule générale:

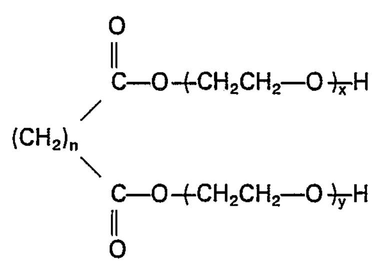

dans laquelle n est égal à 1, 2, 3 ou 4 et x et y sont des entiers ayant une valeur de 2 ou plus.

7. Le procédé selon la revendication 1 ou 4, dans lequel ledit polyesterpolyol répond à la formule générale:

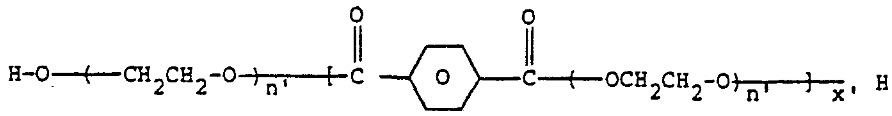

dans laquelle n′ est soit 1, soit 2 et x′ est un entier égal à 1 ou plus.

8. Le procédé selon l'une quelconque des revendications précédentes, dans lequel l'isocyanate est un méthylènediphényle-diisocyanate polymère.